# EUROPEAN PATENT APPLICATION

(11) **EP 2 658 090 A1**
(43) Date of publication of application: **30.10.2013**
(21) Application number: 12165753.0
(22) Date of filing: 26.04.2012
(51) Int. Cl.: H02K 1/27, H02K 1/28

(54) **Rotor magnet engagement assembly**

(71) Applicant: Siemens Aktiengesellschaft, 80333 München (DE)
(72) Inventor: Thomas, Arwyn, Brithdir, SY22 5HF (GB)

(57) **Abstract**

It is described a rotor magnet engagement assembly (100) comprising a rotor base plate (102), a first magnetic interpole element (101), and a second magnetic interpole element (105). The first magnetic interpole element (101) and the second magnetic interpole element (105) are attached to the rotor base plate (102) in such a manner that a gap is provided between the first magnetic interpole element (101) and the second magnetic interpole element (105), wherein the first magnetic interpole element (101), the second magnetic interpole element (105), and the rotor base plate (102) form a recess, wherein the recess is adapted to receive a magnet (104) in such a manner that the magnet is fixed to the rotor base plate (102). It is further described a method for manufacturing a rotor magnet engagement assembly, a rotor magnet arrangement, a rotor for an electromechanical transducer, and an electromechanical transducer.

## Description

### Rotor magnet engagement assembly

### Field of invention

The present invention relates to the technical field of electromechanical transducers having a rotor which comprises magnets, in particular permanent magnets. In particular, the present invention relates to a rotor magnet engagement assembly for a rotor arrangement of an electromechanical transducer. Further, the present invention relates to a rotor magnet arrangement, to a rotor and to an electromechanical transducer. Furthermore, the present invention relates to a method for manufacturing such a rotor magnet engagement assembly.

### Art Background

Electromechanical transducers are machines, which convert electrical energy into mechanical energy or vice versa. An electric motor is a widely used electromechanical transducer that converts electrical energy into mechanical energy using magnetic field linkage. An electric generator is an electromechanical transducer that converts mechanical energy into electrical energy also using a magnetic field linkage.

An electromechanical transducer comprises a stator and a rotor. The stator is an assembly, which represents the stationary part of an electromechanical transducer. The rotor may represent a part or parts of the electromechanical transducer moving relative to the stator arrangement, in particular rotating relative to the stator arrangement. The rotor thereby may comprise magnets, such as permanent magnets, which rotate relative to one or more coils comprised in the stator. Strong permanent magnets, like rare-earth magnets, are used to an increasing extent in large electrical machines, especially in motors and generators. This is due to the increased efficiency and robustness compared to electrical excitation. But regarding practical applications some difficulties may occur. The materials, in particular of rare-earth magnets, may be rather brittle and cannot safely be fixed by bolting alone. The magnets may be fixed to a rotor rim for example by, for instance, gluing. Furthermore, it may be a difficult, time consuming and not least a hazardous process to handle the individual magnets and to get the correct position of each magnet as the magnets may be pulled towards other magnets and ferromagnetic objects in the production setup. Thus, the mounting and alignment of the permanent magnets at the rotor assembly are difficult and time consuming. Further, during operation of the electromechanical transducer, parasitic power loss may occur within the rotor due to eddy currents caused by the non-synchronous magnetic fields created by the stator imposed onto the rotor.

Therefore, there may be a need for facilitating mounting of permanent magnets to a rotor assembly of an electromechanical transducer whilst reducing parasitic power loss.

### Summary of the Invention

This need may be met by the subject matter according to the independent claims. Advantageous embodiments of the present invention are described by the dependent claims.

According to a first aspect of the invention there is provided a rotor magnet engagement assembly comprising a rotor base plate, a first magnetic interpole element, and a second magnetic interpole element. The first magnetic interpole element and the second magnetic interpole element are attached to the rotor base plate in such a manner that a gap is provided between the first magnetic interpole element and the second magnetic interpole element, wherein the first magnetic interpole element, the second magnetic interpole element, and the rotor base plate form a recess, wherein the recess is adapted to receive a magnet in such a manner that the magnet is fixed to the rotor base plate.

The term "rotor base plate" in this context may refer to a plate being used for a rotor of an electromechanical transducer, wherein magnets are attached to the rotor for inducing current to the windings of a corresponding stator.

The term "interpole element" in this context refers to magnetic elements providing interpoles. In common systems, an interpole is arranged as a separate element between magnets, wherein the interpoles are attached to the rotor surface with gaps between the interpoles and the magnets. The interpole elements provide a method of assembly and of magnetic transmission for the magnetic field flowing through the rotor whilst also providing electrical isolation between adjacent rotor conductive structures to limit the parasitic losses via the eddy currents. This reduces loss and improves efficiency for electromechanical transducers whereby the influence of the non-synchronous magnetic field from the stator may cause significant loss in traditional rotor structures.

Eddy-current loss may be induced in the permanent magnets of the rotor, by forward and backward rotating MMFs (magnetomotive forces). Due to the relatively high electrical conductivity of permanent magnets, in particular rare-earth magnets, the resultant eddy-current loss can be significant, and may cause a substantial temperature rise and result in partial irreversible demagnetization of the magnets, especially in machines with
a high electric loading, a high rotational speed, or a high pole number (provided by the magnets).

Thus, the interpole elements may be arranged between magnets, inter alia, for reducing the eddy currents loss by filling the space between two magnets with a magnetic material and by providing an electrical isolation between adjacent rotor conductive structures.

The described rotor magnet engagement assembly is based on the idea that, by using the described assembly, interpole elements can be provided smaller than it has been done before. Having smaller interpole elements, the current flow within these interpole elements can be shorter, and thus, eddy current losses incurred in the interpole regions are lower. The optimal length of each interpole element can be determined for each rotor design.

The basis of the described assembly is to modularize the construction of surface mounted permanent magnet topology rotors, whilst also allowing the rotor topology construction to inhibit any parasitic power loss incurred within the rotor. The loss within the rotor yoke which is characteristic in fractional winding electrical machine topologies due to the non-synchronous components of the armature magnetomotive force field can make their uptake prohibitive in certain electrical machine applications, e.g., DD wind generators. The modulator rotor construction reduces the eddy current circulation within the rotor, which reduces the rotor loss and improves efficiency.

In common systems, no fully modular rotor surfaces, in which the entire surface of the rotor is made up of separate components, has been provided. For reducing eddy current loss, laminated rotors have been used, which may be prohibitive in large structures due to mechanical robustness.

By using the described assembly, a fully modular rotor surface can be provided, wherein the entire surface of the rotor is made up of separate components. As all components, i.e., interpole elements and magnets, are arranged on top of the rotor base plate, the rotor surface is arranged as a multilayer structure, wherein the rotor base plate is arranged in a relatively high depth, which leads to a reduction of the 3D eddy current loss circulation within the rotor. Further, also the multilayer structure reduces the eddy current loss.

According to the herein described assembly, it might not be necessary to mill grooves into the rotor base plate as the magnets are fixed on top of the rotor base plate due to the interpole elements being used as fixation means.

According to an embodiment of the invention, the first magnetic interpole element and the second magnetic interpole element each comprise a first protrusion, wherein the first protrusions face each other, wherein a first slot is formed between the first protrusion of the first magnetic interpole element and the rotor base plate and a second slot is formed between the first protrusion of the second magnetic interpole element and the rotor base plate, wherein the first slot and the second slot are adapted to engage with the magnet in such a manner the magnet is fixed to the rotor base plate.

According to this embodiment, a simple recess-protrusion engagement may be achieved, wherein complementary contours of the magnet can engage into the slots provided by the interpole elements. Using such a structure, the rotor and the stator may already be put together, and the magnets may be inserted later.

According to a further embodiment, the first protrusion of the first magnetic interpole element and the first protrusion of the second magnetic interpole element have a rectangular shape.

According to this embodiment, the slots have also a rectangular shape. A complementary contour of the magnet has also a rectangular shape corresponding to the slots.

According to a further embodiment, the first protrusion of the first magnetic interpole element and the first protrusion of the second magnetic interpole element have a wedge shape.

According to this embodiment, a dovetail recess and corresponding complementary contour may be provided.

According to a further embodiment, the first magnetic interpole element and the second magnetic interpole element each comprise a second protrusion, wherein the second protrusions are opposite to the first protrusions.

The second protrusions may be used for fixing further magnets to the rotor base plate. Thus, one interpole element may be used to fix one side of a first magnet and to fix one side of a second magnet. Thus, a tight structure may be provided without any gaps between magnets and interpole elements.

According to a further embodiment, the first magnetic interpole element and the second magnetic interpole element are fixed to the rotor base plate by bolts.

The rotor base plate and the interpole elements may comprise holes for the bolts. This may provide an easy way of fixing the interpole elements on the rotor base plate.

According to a further embodiment, the first magnetic interpole element and the second magnetic interpole element are made of a magnetic material, in particular a ferromagnetic material.

The magnetic material may be a magnetic structural steel or any other kind of material providing ferromagnetic characteristics.

According to a further aspect of the invention, there is provided a rotor magnet arrangement, the rotor magnet arrangement comprising a rotor magnet engagement assembly as described above, and a magnet assembly comprising a magnet, wherein the magnet is fixed to the rotor base plate by engagement of the recess with a contour of the magnet, wherein the corresponding contour has an outer shape being complementary to the recess.

The contour of the magnet assembly and the recess provided by the first interpole element, the second interpole element and the rotor base plate may function in the form of recess-protrusion. This may provide a very simple way of fixing the magnet to the rotor base plate without the need of milling grooves into the rotor base plate.

According to an embodiment, the magnet assembly comprises a magnet carrier, wherein the magnet is attached to the magnet carrier, and wherein the magnet carrier comprises the contour.

According to this embodiment, the magnet carrier is inserted into the recess of the rotor magnet engagement assembly. This may further provide the advantage that there is no direct contact between the interpole elements and the magnet.

According to an embodiment, the magnet carrier is formed by lamination layers.

For instance, the magnet carrier can be constructed from welded or glued laminated rotor steel to reduce the eddy current loss within arrangement. Glued laminated steel components can be constructed at little extra cist and may create stiff structures after curing.

According to a further aspect of the invention, there is provided a rotor for an electromechanical transducer. The provided rotor may comprise a plurality of rotor magnet arrangements as described above.

The interpole elements described for one rotor magnet arrangement may be used on their respective other side for engaging with a further magnet or respective magnet carrier.

According to a further aspect of the invention there is provided an electromechanical transducer comprising a stator assembly and a rotor as described above.

The provided electromechanical transducer is based on the idea that with the above described rotor, magnets may be inserted after the rotor and the stator have been put together. This may be achieved by the arrangement of the segments of the interpole. The later insertion of the magnet may be called cold marriage or cold bonding.

According to an embodiment of the invention the electromechanical transducer is a generator.

According to a further aspect of the invention there is provided a wind turbine for generating electrical power. The provided wind turbine comprises a tower, a wind turbine rotor, which is arranged at a top portion of the tower and which comprises at least one blade, and an electromechanical transducer as described above, wherein the electromechanical transducer is mechanically coupled with the wind turbine rotor.

According to a further aspect of the invention there is provided a method for manufacturing a rotor magnet engagement assembly. The method comprises attaching a first magnetic interpole element to a rotor base plate and attaching a second magnetic interpole element to the rotor base plate in such a manner that a gap is provided between the first magnetic interpole element and the second magnetic interpole element, wherein the first magnetic interpole element, the second magnetic interpole element, and the rotor base plate form a recess, wherein the recess is adapted to receive a magnet in such a manner that the magnet is fixed to the rotor base plate.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless other notified, in addition to any combination of features belonging to one type of subject matter also any combination between features relating to different subject matters, in particular between features of the apparatus type claims and features of the method type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Figure 1 shows a rotor magnet engagement assembly according to an embodiment of the present invention.
Figure 2 shows a non-segmented interpole.
Figure 3 shows a segmented interpole.
Figure 4 shows a rotor magnet arrangement according to an embodiment of the invention.

### Detailed Description

The illustration in the drawing is schematically. It is noted that in different figures, similar or identical elements are provided with the same reference signs.

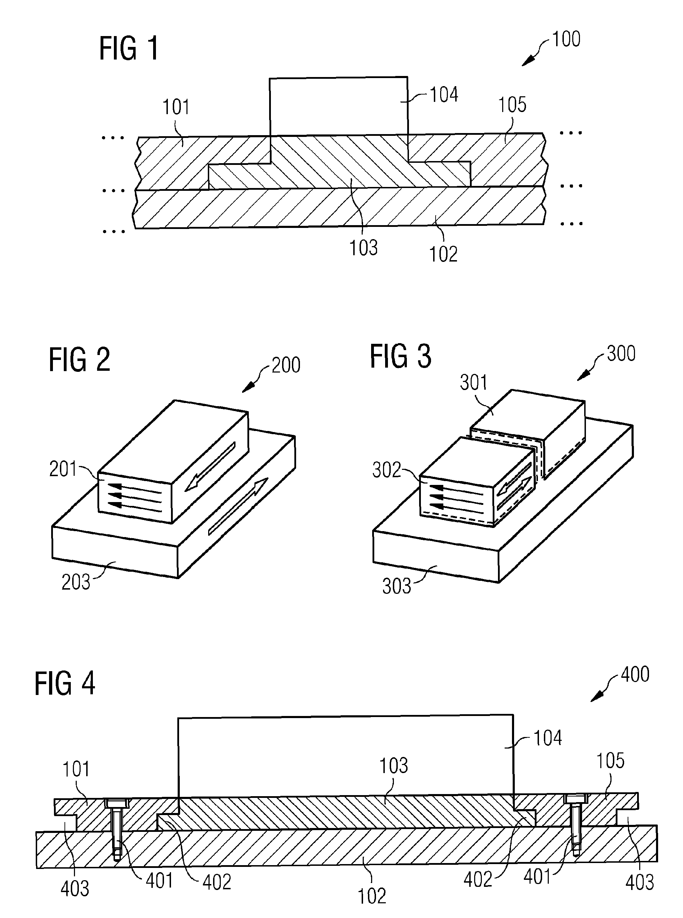

Figure 1 shows rotor magnet engagement assembly 100. The assembly 100 comprises a rotor base plate 102, a first magnetic interpole element 101, and a second magnetic interpole element 105. The first magnetic interpole element 101 and the second magnetic interpole element 105 are attached to the rotor base plate 102 in such a manner that a gap is provided between the first magnetic interpole element 101 and the second magnetic interpole element 105. Thus, the both elements are arranged with a specific distance to each other.

The first magnetic interpole element 101, the second magnetic interpole element 105, and the rotor base plate 102 form a recess. A magnet, for instance a magnet carrier carrying a magnet, can be inserted in the recess in such a manner that the magnet is fixed to the rotor base plate 102.

Based on this assembly, a modularisation of the entire rotor surface may be achieved. This is done, inter alia, by having the interpole elements fixed in place first and then the magnet carrier can be slide into position into the slots made between the interpole elements and the rotor structure. This allows for the magnets to be inserted after the rotor and stator have been put together, described as cold marriage. This may further provide the advantage that the magnet carrier may be a thick laminated magnet carrier which also reduces the eddy current losses.

The rotor base plate may also be laminated and may have a specific thickness or depth, wherein the base plate depth might need to be determined before hand from eddy current loss analysis, to provide the optimum loss minimisation.

The assembly of Fig. 1 further provides the advantage that an interpole region may be segmented. This may denote that the interpole elements may be smaller than interpole elements as used in common systems.

Figs. 2 and 3 show the advantage of smaller interpole elements. Fig. 2 shows a non-segmented interpole 200. The interpole element 201 is quite big and is mounted on top of a magnet 203. A current flow occurs in the interpole element as well as in the magnet (illustrated by the bold arrows, wherein the flux flow is illustrated by the small arrows within the interpole element 201). Fig. 3, showing a segmented interpole 300, illustrates that the shorter the current flow (bold arrows in interpole element 302), the lower the losses incurred in the interpole region/assembly.

As may be seen, the interpole element is segmented in two elements 301, 302, wherein a current boundary (dashed lines) is provided around each interpole element. Thus, the current flow only occurs within one interpole element. Ideally, there should be an investigation for each topology/design to determine the optimal interpole region/assembly length.

Fig. 4 illustrates a schematic of the full assembly 400. The interpole regions/elements are used to provide fixation of the laminated magnet carrier 103 to the rotor. The magnet carrier comprises a contour with an outer shape being complementary to the recess of the rotor magnet engagement assembly. Slots 402, 403 are provided on each side of the interpole elements for providing recesses for magnets. The interpole regions/elements may be made of a magnetic structural steel. Each interpole element 101, 105 is fixed to the rotor base plate by a bolt 401.

The idea of the described assembly and arrangement is to provide a modular construction of the rotor allowing for the magnetic structural components (i.e., laminated magnet carrier and the interpole elements (also called segmented interpole fixing), which carry the alternating flux, to be made of modular or laminated electrical steels. This construction may reduce the eddy current losses within the rotor structure significantly (for instance up to 80%). Thereby, the efficiency of fractional slot concentrated winding generators may be increased and the thermal loss in the rotor may be reduced.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. A rotor magnet engagement assembly (100) comprising
a rotor base plate (102),
a first magnetic interpole element (101), and
a second magnetic interpole element (105),
wherein the first magnetic interpole element (101) and the second magnetic interpole element (105) are attached to the rotor base plate (102) in such a manner that a gap is provided between the first magnetic interpole element (101) and the second magnetic interpole element (105),
wherein the first magnetic interpole element (101), the second magnetic interpole element (105), and the rotor base plate (102) form a recess, wherein the recess is adapted to receive a magnet (104) in such a manner that the magnet is fixed to the rotor base plate (102).

2. The rotor magnet engagement assembly as set forth in claim 1,
wherein the first magnetic interpole element (101) and the second magnetic interpole element (105) each comprise a first protrusion, wherein the first protrusions face each other,
wherein a first slot (402) is formed between the first protrusion of the first magnetic interpole element (101) and the rotor base plate (101) and a second slot (402) is formed between the first protrusion of the second magnetic interpole element (105) and the rotor base plate (102),
wherein the first slot (402) and the second slot (402) are adapted to engage with the magnet in such a manner the magnet is fixed to the rotor base plate (102).

3. The rotor magnet engagement assembly (100) as set forth in claim 2,
wherein the first protrusion of the first magnetic interpole element (101) and the first protrusion of the second magnetic interpole element (105) have a rectangular shape.

4. The rotor magnet engagement assembly (100) as set forth in claim 2,
wherein the first protrusion of the first magnetic interpole element (101) and the first protrusion of the second magnetic interpole element (105) have a wedge shape.

5. The rotor magnet engagement assembly (100) as set forth in any one of the claims 2 to 4,
wherein the first magnetic interpole element (101) and the second magnetic interpole element (105) each comprise a second protrusion, wherein the second protrusions are opposite to the first protrusions.

6. The rotor magnet engagement assembly (100) as set forth in any one of the preceding claims,
wherein the first magnetic interpole element (101) and the second magnetic interpole element (105) are fixed to the rotor base plate by bolts.

7. The rotor magnet engagement assembly (100) as set forth in any one of the preceding claims,
wherein the first magnetic interpole element (101) and the second magnetic interpole element (105) are made of a magnetic material, in particular a ferromagnetic material.

8. A rotor magnet arrangement (400), the rotor magnet arrangement comprising
a rotor magnet engagement assembly (100) as set forth in any one of the preceding claims, and
a magnet assembly comprising a magnet (104),
wherein the magnet (104) is fixed to the rotor base plate by engagement of the recess with a contour of the magnet, wherein the corresponding contour has an outer shape being complementary to the recess.

9. The rotor magnet arrangement as set forth in claim 8, wherein
the magnet assembly comprises a magnet carrier (103), wherein the magnet (104) is attached to the magnet carrier (103), and
wherein the magnet carrier comprises the contour.

10. The rotor magnet arrangement (400) as set forth in any one of the claims 8 to 9,
wherein the magnet carrier is formed by lamination layers.

11. A rotor for an electromechanical transducer, the rotor comprising
a plurality of rotor magnet arrangements as set forth in any one of the claims 8 to 10.

12. An electromechanical transducer comprising
a stator assembly, and
a rotor as set forth in claim 11.

13. A method for manufacturing a rotor magnet engagement assembly (100), the method comprising
attaching a first magnetic interpole element (101) to a rotor base plate and attaching a second magnetic interpole element (105) to the rotor base plate (102) in such a manner that a gap is provided between the first magnetic interpole element (101) and the second magnetic interpole element (105),
wherein the first magnetic interpole element (101), the second magnetic interpole element (105), and the rotor base plate (102) form a recess, wherein the recess is adapted to receive a magnet in such a manner that the magnet is fixed to the rotor base plate (102).
